# EUROPEAN PATENT SPECIFICATION

(11) **EP 1 932 071 B1**
(45) Date of publication and mention of the grant of the patent: **28.03.2012**
(21) Application number: 06806957.4
(22) Date of filing: 04.10.2006
(51) Int. Cl.: G06F 3/02, H01H 9/18

(54) **MULTI-FACE BUTTON SYSTEMS AND ELECTRONIC DEVICES AND METHODS USING THE SAME**
MEHRFACH-VORDERSEITEN-SCHALTFLÄCHENSYSTEME UND ELEKTRONISCHE EINRICHTUNGEN UND VERFAHREN DAMIT
SYSTEME DE BOUTONS A PLUSIEURS FACES ET DISPOSITIF ELECTRONIQUE ET PROCEDES L'UTILISANT

(30) Priority: 06.10.2005 US 724011 P; 02.12.2005 US 293525
(43) Date of publication of application: 18.06.2008
(73) Proprietor: Sony Ericsson Mobile Communications AB, 221 88 Lund (SE)
(72) Inventor: WAHLSTRÖM, Per, S-212 31 Malmö (SE); WERNERSSON, Mats, S-252 63 Helsingborg (SE)
(74) Representative: VALEA AB
(86) International application number: PCT/EP2006/067022
(87) International publication number: WO 2007/039617

(56) References cited:
- EP-A- 1 067 503
- EP-A- 1 128 344
- WO-A-03/079175
- GB-A- 2 151 056
- US-A- 4 336 530
- US-A- 5 151 696
- US-B1- 6 226 906

## Description

### RELATED APPLICATION

This application claims the benefit of priority from U.S. Provisional Patent Application No. 60/724,011, filed October 6, 2005, published as U.S. Patent Application Publication US 2007/0080948 A1, filed December 2, 2005.

### FIELD OF THE INVENTION

The present invention relates to electronic devices and, more particularly, to electronic devices including control buttons and methods using the same.

### BACKGROUND OF THE INVENTION

As consumer preferences and improved technology result in smaller electronic devices, the space available on electronic devices for keypads and other user input interfaces is increasingly limited. Keypads and touch sensitive screens have been engineered for space efficiency in these environments. However, the functionality and/or ease of use may be compromised in an effort to decrease the size of the user interface.

For example, portable or handheld devices, such as a mobile terminal, may provide various functionalities or operational modes, such as communication, games, and multi-media rendering. To decrease the number of user keys used in a keypad, a particular key may be used in connection with different functionalities depending on the operational mode. For example, in the communication mode, a single key may be used for entering a "1", whereas the same key in the multi-media mode may be used for initiating a "play" command for rendering multi-media data.

Multifunctional keys may be confusing to a user. Several symbols may need to be provided in a relatively small area. This may be a problem as the physical area available in a portable communication apparatus for each key is limited. As a result, the symbols may be relatively small and difficult to read. Furthermore, it may be difficult to distinguish the symbols from each other and/or be confusing for the user because the functionality of the key may be unclear.

Mobile terminals such as mobile phones also commonly employ "soft keys", which are a kind of generic key that changes behavior or functionality as various applications are activated. The function associated with a certain key is communicated to the user by changing text in the main display.

It is desirable to instead have keys with text or icons that can change appearance. Several different solutions have been suggested. The document US 5151696 A, filed March 28, 1990 discloses a remote control apparatus having a plurality of buttons fitted in a plurality of windows formed in a casing member. Each of the buttons is formed of a transparent material. A name plate is moveably arranged under the casing member in such a way that it can display different text or icons through the windows formed in the casing member, when being positioned in different positions. The document WO 03/079175 A1, filed March 13, 2003 discloses a method for displaying individually on a plurality of keys of a keyboard or keypad two or more indicia representing two or more functions performed by each key. The keys are characterized in that each of the two or more indicia is provided on the key in a plurality of separated portions. The portions being positioned in a spaced positioned relationship with one another, so as not to be physically closely juxtaposed. When viewed at a predetermined angle all parts of the indicia are optically juxtaposed to create the entire indicia. Further, several other solutions of having keys with text or icons that can change appearance have been suggested. Most of them rely on LEDs in various colors or other techniques that change the appearance of a button when the light changes. Such solutions may work in dark environments but not in bright daylight. The document EP 1128344 A2, filed February 19, 2001 discloses a technique for displaying information on the front door of an automatic vending machine including a convex panel constituted by a coherent array formed of cylindrical lenses extending in a horizontal direction for producing a dynamic display having an animated appearance.

### SUMMARY OF THE INVENTION

The embodiments below have been set forth for the purpose of example, the scope of the invention is defined by the claims. According to embodiments, a button system includes an image sheet including first and second source images, and a screen superimposed on the image sheet such that the image sheet is displayed to a user through the screen. The image sheet and the screen are relatively movable between a first position, wherein the button system displays the first source image to the user, and a second position, wherein the button system displays the second source image to the user.

According to some embodiments, the button system further includes a button activator underlying the image sheet.

According to some embodiments, the screen includes a lens screen adapted to convert the first and second source images as displayed to the user into first and second displayed images, the first and second displayed images being different from the first and second source images. The lens screen may include at least one prism. According to some embodiments, the prism has a radius of curvature of no more than 0.1 mm. The lens screen may be a lenticular lens. According to some embodiments, the first source image includes a plurality of first image segments having first voids therebetween, and the first voids are reduced in the first displayed image as compared to the first source image. According to some embodiments, the second source image includes a plurality of second image segments having second voids therebetween and being interposed between the first image segments, and the second voids are reduced in the second displayed image as compared to the second source image.

The button system may further include a mask pattern on the screen adapted to hide the second source image when the button system is in the first position.

The button system may further include an actuator operable to move at least one of the image sheet and the screen between the first position and the second position, and a controller operative to control the actuator.

According to some embodiments, the first and second positions correspond to first and second different operational modes of an associated electronic device.

According to further embodiments of the present invention, an electronic device includes a button system. The button system includes an image sheet including first and second source images, and a screen superimposed on the image sheet such that the image sheet is displayed to a user through the screen. The image sheet and the screen are relatively movable between a first position, wherein the button system displays the first source image to the user, and a second position, wherein the button system displays the second source image to the user.

According to some embodiments, the electronic device further includes a button activator underlying the image sheet.

According to some embodiments, the screen includes a lens screen adapted to convert the first and second source images as displayed to the user into first and second displayed images, the first and second displayed images being different from the first and second source images. The lens screen may be a lenticular lens.

According to some embodiments, the first and second positions correspond to first and second different operational modes of an associated electronic device.

The electronic device may be a wireless communications device. The electronic device may be a handheld wireless communications device.

According to method embodiments of the present invention, a method for providing a multi-face button using a button system including an image sheet and a screen superimposed on the image sheet such that the image sheet is displayed to a user through the screen, the image sheet including first and second source images, includes relatively moving the image sheet and the screen from a first position, wherein the button system displays the first source image to the user, and a second position, wherein the button system displays the second source image to the user.

The method may further include pressing the screen to actuate a button activator.

The method may further include thereafter relatively moving the image sheet and the screen from the second position to the first position to again display the first source image to the user.

According to some embodiments, the method includes switching from a first operational mode of an associated electronic device to a second, different operational mode of an associated electronic device.

Further features, advantages and details of the present invention will be appreciated by those of ordinary skill in the art from a reading of the figures and the detailed description of the preferred embodiments that follow, such description being merely illustrative of the present invention.

### BRIEF DESCRIPTION OF THE DRAWINGS

**Figure 1** is an exploded, perspective view of a button system according to embodiments of the present invention.

**Figure 2** is a schematic, partial side view of the button system of **Figure 1** in a first position, wherein the button system displays a first displayed image according to embodiments of the invention.

**Figure 3** is a further schematic, partial side view of the button system of **Figure 1** in the first position illustrating viewing from another angle.

**Figure 4** is a schematic, partial side view of the button system of **Figure 1** in a second position, wherein the button system displays a second displayed image according to embodiments of the invention.

**Figure 5** is a front view of a merged source image on an image sheet of the button system of **Figure 1** in accordance with embodiments of the present invention.

**Figure 6** is a front view of the first displayed image of the button system of **Figure 1****.**

**Figure 7** is a front view of the second displayed image of the button system of **Figure 1****.**

**Figure 8** is a schematic, partial side view of the button system of **Figure 1** modified to further include a mask according to embodiments of the present invention.

**Figure 9** is a schematic diagram of a mobile terminal according to embodiments of the present invention and an exemplary base station transceiver.

**Figure 10** is a schematic front view of the mobile terminal of **Figure 9** wherein the button system is in the first position.

**Figure 11** is a schematic front view of the mobile terminal **of** **Figure 9** wherein the button system is in the second position.

**Figure 12** is a partial, cross-sectional view of the mobile terminal of **Figure 9** taken along the line **12-12** of **Figure 10****.**

**Figure 13** is an enlarged, partial, cross-sectional view of the mobile terminal of **Figure 9** taken along the line **13-13** of **Figure 10****.**

**Figure 14** is a front view of a merged source image on an image sheet of a button system according to further embodiments of the present invention.

**Figure 15** is a front view of a first displayed image of the button system of **Figure 14****.**

**Figure 16** is a front view of a second displayed image of the button system of **Figure 14****.**

**Figure 17** is a front view of a third displayed image of the button system of **Figure 14****.**

### DETAILED DESCRIPTION OF EMBODIMENTS OF THE INVENTION

The present invention now will be described more fully with reference to the accompanying drawings, in which embodiments of the invention are shown. However, this invention should not be construed as limited to the embodiments set forth herein. Rather, these embodiments are provided so that this disclosure will be thorough and complete, and will fully convey the scope of the invention to those skilled in the art. Like numbers refer to like elements throughout.

As used herein, the term "comprising" or "comprises" is open-ended, and includes one or more stated features, integers, elements, steps, components or functions but does not preclude the presence or addition of one or more other features, integers, elements, steps, components, functions or groups thereof.

As used herein, the term "and/or" includes any and all combinations of one or more of the associated listed items.

As used herein, the common abbreviation "e.g. ", which derives from the Latin phrase "exempli gratia," may be used to introduce or specify a general example or examples of a previously mentioned item, and is not intended to be limiting of such item. If used herein, the common abbreviation "i.e.", which derives from the Latin phrase "id est," may be used to specify a particular item from a more general recitation.

The terminology used herein is for the purpose of describing particular embodiments only and is not intended to be limiting of the invention. As used herein, the singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In addition, spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Furthermore, "coupled" or "connected" as used herein may include wirelessly coupled or connected.

Well-known functions or constructions may not be described in detail for brevity and/or clarity.

As used herein, "electronic component" means an active device as contrasted with a passive electrical connector or the like. An electronic component may include a processor.

As used herein, a "communication terminal" includes, but is not limited to, a terminal that is configured to receive/transmit communication signals via a wireline connection, such as via a public-switched telephone network (PSTN), digital subscriber line (DSL), digital cable, or another data connection/network, and/or via a wireless interface with, for example, a cellular network, a satellite network, a wireless local area network (WLAN), and/or another communication terminal.

When the communication terminal is configured to communicate over a wireless interface, it is referred to herein as a "wireless communication terminal" or a "wireless terminal." Examples of wireless terminals include, but are not limited to, a cellular telephone, personal data assistant (PDA), pager, and/or a computer that is configured to communicate data over a wireless communication interface that can include a cellular telephone interface, a Bluetooth interface, a wireless local area network interface (*e.g.*, 802.11), another RF communication interface, and/or an optical/infra-red communication interface.

As used herein, "mobile terminals" may be portable, transportable, installed in a vehicle (aeronautical, maritime, or land-based), or situated and/or configured to operate locally and/or in a distributed fashion at any other location(s) on earth and/or in space.

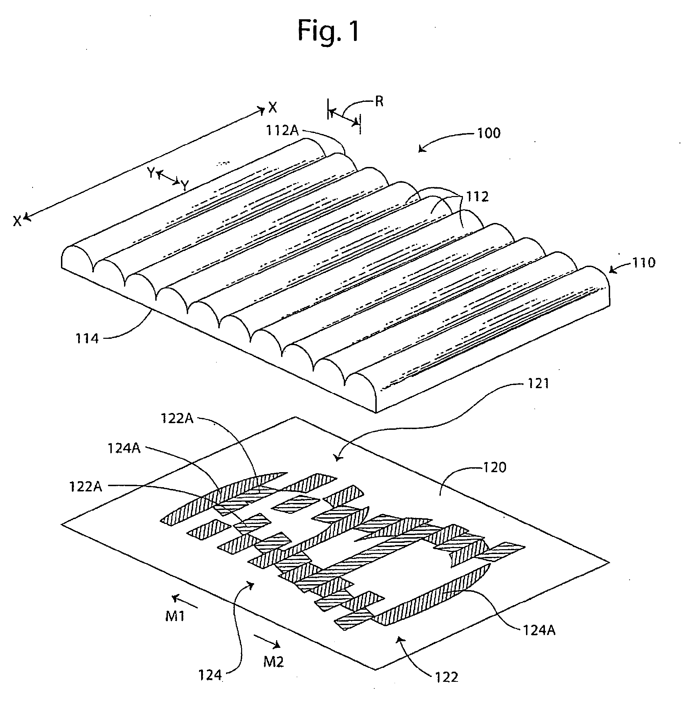

Embodiments of the present invention will now be described below with respect to **Figures 1-17****.** Embodiments of the present invention provide multi-face button systems and electronic devices incorporating multi-face button systems. Each multi-face button is configured to alternatively display each of a first display image and a second display image on a button. The first and second display images may correspond to and be displayed in tandem with first and second operational modes of the electronic device (*e.g.*, a phone mode and a camera mode). According to some embodiments, the electronic device is a mobile terminal.

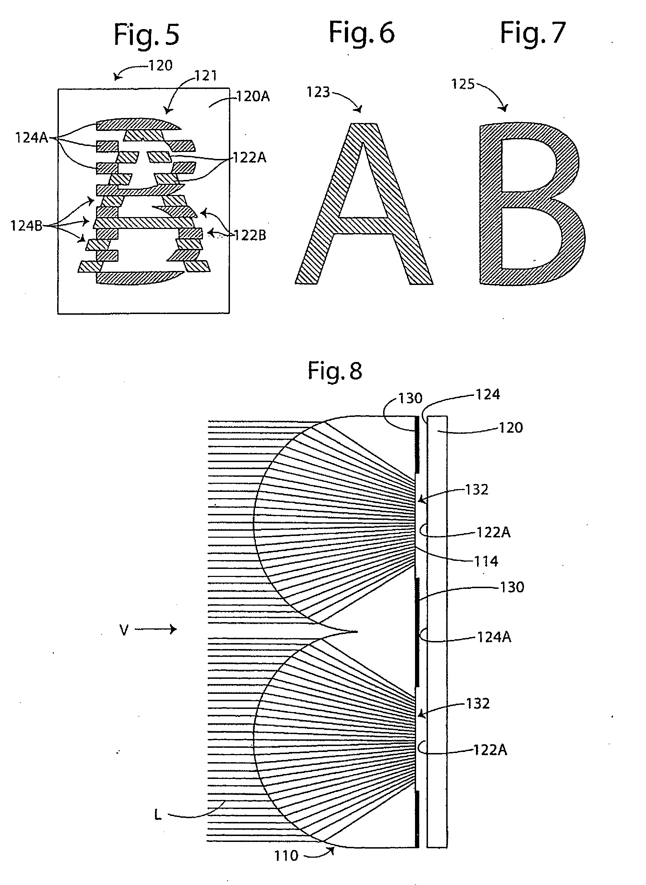

Embodiments of the present invention are illustrated in **Figure 1****,** wherein a dual-or multi-face button system **100** is shown. The button system **100** includes an optical or lens screen **110** made of a translucent or transparent material having a plurality of prisms **112.** The system **100** further includes an image sheet **120** with two source images **122** and **124** provided thereon as printed symbols. For example, for the purposes of illustration, the first source image **122** may consist of spaced apart image segments **122A** generally forming a letter "A" pattern and the second source image **124** may consist of spaced apart image segments **124A** generally forming a letter "B" pattern. The image segments **122A, 124A** are interdigitated to form a merged or combined source image **121** on the image sheet **120.** The combined source image **121** (as it appears directly on the image sheet **120** without looking through the screen **110)** is also shown in **Figure 5****.**

The image sheet **120** is preferably in close contact with the screen **110.** The image sheet **120** may be backlit and/or reflective. The screen **110** and the sheet **120** may be positioned over a button mechanism (*e.g.*, an electro-mechanical contact pad or switch) such that pressing the screen **110** serves to actuate the button. A further member such as a button cover member may be positioned over the screen **110** so that the user contacts the button cover member when pressing the button.

The prisms **112** extend generally parallel to a prism axis **X-X** (**Figure 1**). The prism axis **X-X** is transverse to (and, according to some embodiments, substantially perpendicular to) a movement or slide axis **Y-Y.** The image segments **122A** and **124A** are interdigitated or alternate along the slide axis **Y-Y** and generally extend lengthwise parallel to the prism axis **X-X.**

The image sheet **120** may include a background portion **120A** (**Figure 5**) that surrounds and provides a contrast with the source images **122, 124.** For example, the background portion **120A** may be opaque and the source images **122, 124** may be translucent or transparent so that a greater amount of the backlighting is transmitted through the source images **122, 124** than the background portion **120A.** Alternatively, the source images **122, 124** may be relatively opaque compared to the background portion **120A.** Alternatively, or additionally, the background portion **120A** may have a color that contrasts with the color(s) of either or both of the source images **122, 124.** While the image segments **122A** and **124A** are differently shaded for the purposes of explanation, it will be appreciated that they may have the same or different color and/or opacity characteristics.

The lens screen **110** and image sheet **120** may each be formed of any suitable material such as a glass or polymeric material. The source images **122, 124** and/or the background portion **120A** may be provided on the image sheet **120** by any suitable method. For example, the source images **122, 124** may be deposited or printed on a surface of the image sheet or defined by portions omitted or removed (*e.g.*, etched) from a printed layer forming the background portion **120A.** By way of further example, the source images may be portions or members embedded in the image sheet **120.**

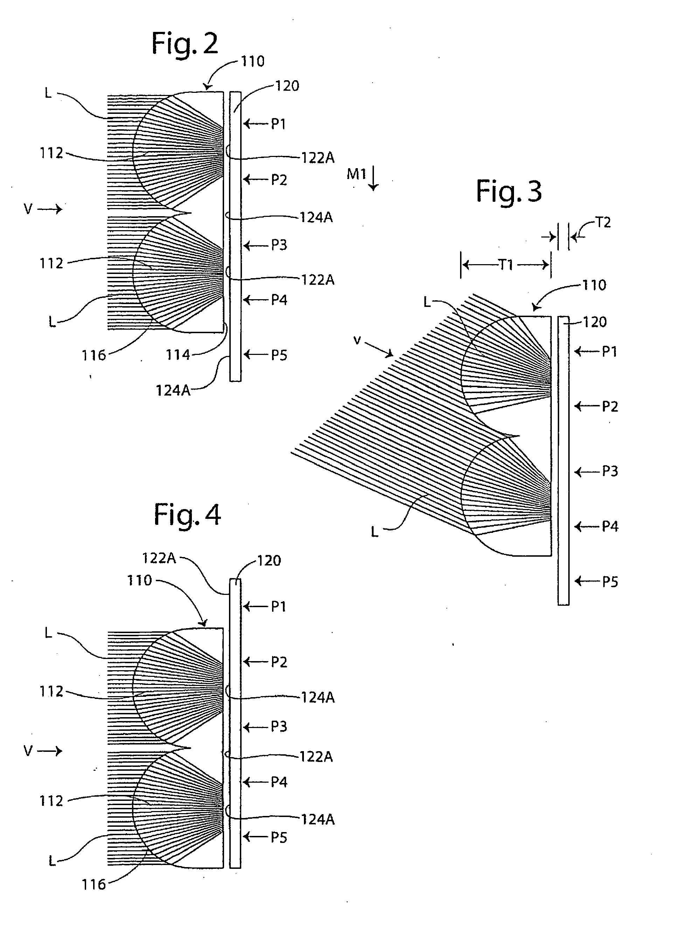

According to some embodiments, the screen **110** has a thickness **T1** (**Figure 3**) in the range of from about 0.1 to 0.3 mm. According to some embodiments, the image sheet **120** has a thickness **T2** (**Figure 3**) in the range of from about 0.1 to 0.3 mm.

According to some embodiments, the prisms **112** of the screen **110** are semi-cylindrical. According to some embodiments, the pitch of the screen is quite dense in order to achieve a good resolution. According to some embodiments, a pitch of between about 0.1 and 0.2 mm is provided.

In accordance with methods of the present invention, the sheet **120** can be positioned in a first position to display the first source image **122** through the screen **110** to a user on the screen side of the button system **100.** The image sheet **120** can then be shifted or moved sideways along the slide axis **Y-Y** (as indicated by the arrow **M1** in **Figure 1**) relative to the screen **110** into a second position to display the second source image **124** through the screen **110** to a user. According to some embodiments, the image sheet **120** is moved a distance of approximately the radius **R** of the curves **112A** of the prisms **112** of the screen **110.** The image sheet **120** can then be moved sideways in the opposite direction along the slide axis **Y-Y** (as indicated by the arrow **M2** in **Figure 1**) relative to the screen **110** back into the first position to display the first source image **122** again.

**Figures 2-4** further illustrate the operation of the button system **100** and show schematic side views or cross-sectional views of two adjacent prisms **112** of the screen **110.** The viewing user would be positioned on the left side of the screen **110** and the image sheet **120** would be positioned on the right side with the viewer looking at the system **100** in a direction **V.** Bundles of light rays from the image sheet **120** (from a backlighting source or reflection) are transmitted through the screen **110** from the back surface **114** toward the front surface **116** *(i.e.,* right to left) and are refracted by the prisms **112** as shown. The prisms **112** may thereby serve to collimate (in part or in full) the light bundles **L** and enlarge the cross-sectional area of the light bundles **L** as shown.

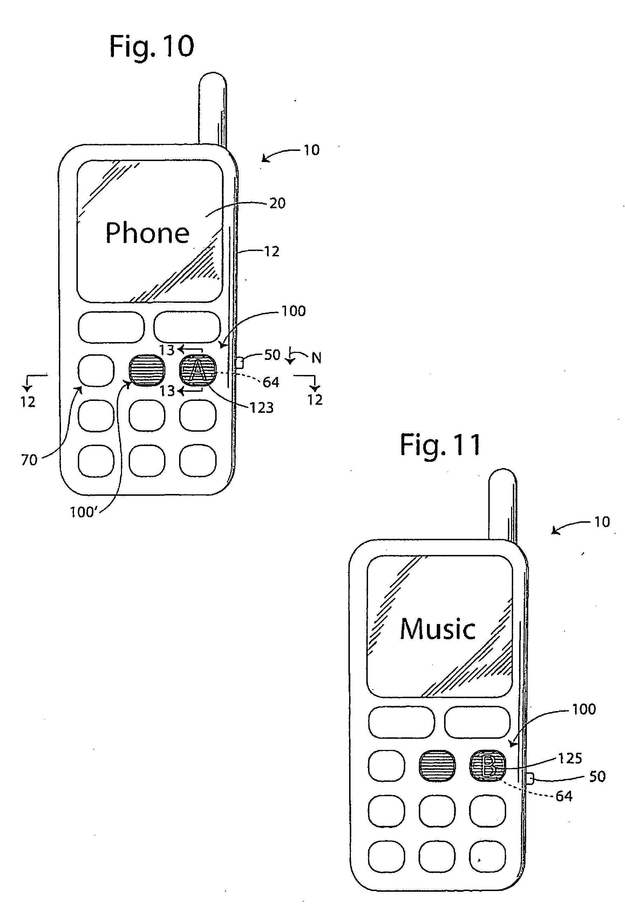

In a first position as shown in **Figure 2****,** the user will only see the portions of the sheet **120** between locations **P1** and **P2** and between locations **P3** and **P4.** Image segments **122A** are disposed in these locations. The portions of the sheet **120** between locations **P2** and **P3** and between locations **P4** and **P5** are not visible. Image segments **124A** are disposed in these locations. **Figure 3** shows that this is the case also when the user views the button system **100** at a relatively steep angle. In the first position, a displayed image **123** will appear to the user through the screen **110** as shown in **Figures 6** and **10****.** The displayed image **123** forms the letter "A", and corresponds to the source image **122** except that certain spaces or voids in the pattern of the source image **122** are eliminated as will be appreciated by comparison of **Figures 5** and **6****.** The prisms **112** serve to refract the image segments **122A** so that the spaces or voids **122B** (**Figure 5**) therebetween are reduced or eliminated in the displayed image **123.**

The user then slides the sheet **120** in the direction **M1** relative to the screen **110** (and/or slides the screen **110** in the opposite direction) to the second position as shown in **Figure 4****.** In the position as shown in **Figure 4****,** the user will only see the portions of the sheet **120** between locations **P2** and **P3** and between locations **P4** and **P5.** The portions of the sheet **120** between locations **P1** and **P2** between locations **P3** and **P4** are not visible. In the second position, a displayed image **125** will appear to the user through the screen **110** as shown in **Figures 7** and **11****.** The displayed image **125** forms the letter "B", and corresponds to the source image **124** except that certain spaces of the source image **124** are eliminated as will be appreciated by comparison of **Figures 5** and **7****.** The prisms **112** again serve to refract the image segments **124A** so that spaces or voids **124B** (**Figure 5**) therebetween are reduced or eliminated in the displayed image **125.** The button system **100** can be returned to the first position to again display the displayed image **123** by sliding the image sheet **120** in the direction **M2** relative to the screen **110** (and/or sliding the screen **110** in the opposite direction).

Thus, the sheet **120** can be designed in such a way that image segments **122A** forming one symbol (or other image) are present between locations **P1** and **P2** and between locations **P3** and **P4,** and image segments **124A** forming another symbol are present between locations **P2** and **P3** and between locations **P4** and **P5.** By shifting the position of the sheet **120** relative to the overlying screen **110,** it is possible to change or alternate between two symbols or other patterns visible to the user.

Moreover, the prisms **112** may serve to modify the source image **122, 124** so that a more preferred displayed image **123, 125** is provided. For example, as illustrated, the prisms **112** convert the spaced apart segments **122A, 124A** into solid images of "A" and "B".

According to some embodiments, the image sheet **120** is moved between the first and second positions a distance of about 0.5 times the pitch size. Thus, only a small mechanical movement is necessary, which may facilitate construction and operation of the button system **100.** The image sheet **120** and the screen **110** can be relatively moved using any suitable method or mechanism. Either or both of the image sheet **120** and the screen **110** can be moved relative to a common structure (*e.g.*, a device housing). For example, a lever or other mechanism can be coupled to the sheet **120** and/or the screen **110** such that when the lever is moved it causes relative movement between the sheet **120** and the screen **110.** This same lever or the like may also be used to switch between operational modes of a device so that the displayed button images correspond to the respective selected modes.

The button system may comprise a group of keys or buttons. For example, an image sheet may cover the area of a group of keys and be movable using a single mechanical or electro-mechanical device or mechanism. A group of keys may, for example, be switched between music or sound player keys (with corresponding symbols) and generic phone keys (with corresponding symbols).

The image sheet **120** may be made of a semi-transparent or translucent material allowing keyboard LEDs or other backlighting to shine through. In that case, it will be clearly visible in bright environments as well as in the dark.

Embodiments of the present invention can provide a compact and cost-effective solution to the problem of dual face buttons. The button system may work effectively under both light and dark conditions.

The screen employed (*e.g.*, the screen **110**) may be a lens screen of the type commonly referred to as a lenticular screen. Such screens have been used for creating 3D images and images that change appearance when the user tips it.

According to embodiments of the invention, the lenticular screen of the button system differs from that of some conventional lenticular screens. A lenticular screen is usually designed to show different images depending on the viewing angle. For stereoscopic imaging, this effect is used to direct one image to the left eye and another image to the right eye of the viewer. In other applications, multiple images are located under the screen and the viewer will see different images as the viewer tips the image, viewing it from different directions. The lens curvature has a relatively large radius in order to achieve this effect.

According to embodiments of the invention, the lenticular screen of the present invention differs in this aspect. The lens radius is made much shorter. The effect of the inventive lenticular screen will then be generally opposite that of the typical 3D-device screen. Instead of showing different images depending on the viewing angle, the same image is shown regardless of the viewing angle (at least within a prescribed range of viewing angles). A portion of the image sheet bearing the images is hidden from the user regardless of the viewing angle. The only way of showing the hidden portion is to move the image sheet relative to the lenticular screen. According to some embodiments, the lens radius **R** (*i.e.*, the radius of curvature of each prism **112**) of the screen **110** is no more than 0.1 mm and, according to some embodiments, between about 0.05 and 0.15 mm.

According to further embodiments of the invention and with reference to **Figure 8****,** an opaque mask **130** may be printed on the flat surface **114** of the lenticular screen **110.** According to further embodiments of the invention, the mask **130** has the same color as the background of the sheet **120** surrounding the source images **122, 124.** In a given position, the mask **130** obfuscates, hides or covers the image segments of one source image and the image segments of the other source image are exposed through openings **132** in the mask **130.** For example, in the first position, the mask **130** covers the image segments **124A** of the hidden source image **124** but image segments **122A** of the non-hidden source image **122** are exposed through the openings **132** in the mask **130.** The mask **130** may serve to compensate for imperfections in the lenticular screen **110** due to the manufacturing process that might otherwise cause some light rays from the hidden image to escape through the screen. Some internal reflections in the screen may also mix some light rays from the two source images. This may be disturbing if the two source images are of different colors.

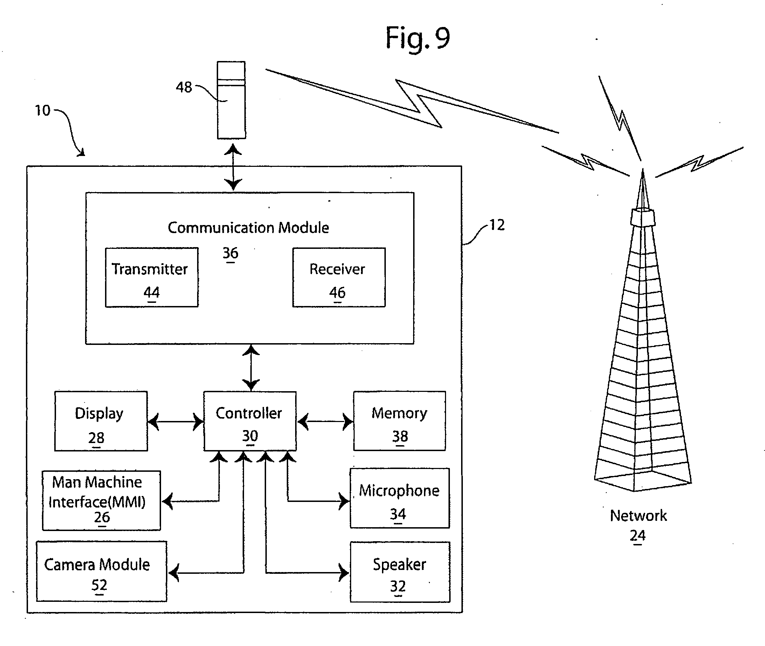

Button systems of the present invention may be incorporated into an electronic device such as a communication terminal. According to some embodiments, the button system is incorporated into a mobile communication terminal. According to some embodiments, the button system is incorporated into a wireless communication terminal such as a cellular telephone, which may be a mobile wireless communication terminal. In particular, the mobile terminal may be a handheld terminal. An exemplary mobile wireless communication terminal **10** including the button system **100** is shown in **Figures 9-13****.**

Referring now to **Figure 9****,** an exemplary radiotelephone communication system in accordance with embodiments of the present invention is illustrated, which includes the mobile wireless communication terminal **10** and a base station transceiver, which is part of a wireless communications network **24.** In some embodiments of the present invention, the network **24** includes a base station transceiver that includes the radio transceiver(s) that define an individual cell in a cellular network and communicates with the mobile terminal **10** and other mobile terminals in the cell using a radio-link protocol. It will be understood that, in some embodiments of the present invention, many base station transceivers may be connected through, for example, a mobile switching center and other devices to define a wireless communications network.

The mobile terminal **10** includes a portable housing assembly **12** and a man machine interface (MMI) **26.** The mobile terminal **10** also includes a display **28,** a speaker **32,** a microphone **34,** a transceiver or communication module **36,** and a memory **38** including application information and parameters, any of which may communicate with a processor or controller **30.** Furthermore, the mobile terminal **10** according to embodiments of the present invention may further include a digital camera module **52,** which also communicates with the controller **30.** Other user interface devices may be provided such as other suitable input device(s).

The speaker **32** generates sound responsive to an input audio signal. The microphone **34** is coupled to an audio processor that is configured to generate an audio data stream responsive to sound incident on the microphone. The display **28** may be, for example, a liquid crystal display (LCD).

The communication module **36** can include a cellular communication module, a direct point-to-point connection module, and/or a WLAN module. With a cellular communication module, the wireless terminal **10A** can communicate via the base station(s) of the network using one or more cellular communication protocols such as, for example, Advanced Mobile Phone Service (AMPS), ANSI-136, Global Standard for Mobile (GSM) communication, General Packet Radio Service (GPRS), enhanced data rates for GSM evolution (EDGE), code division multiple access (CDMA), wideband-CDMA, CDMA2000, and Universal Mobile Telecommunications System (UMTS). The cellular base stations may be connected to a Mobile Telephone Switching Office (MTSO) wireless network, which, in turn, can be connected to a PSTN and/or another network.

The communication module **36** may include a transceiver typically having a transmitter circuit **44** and a receiver circuit **46,** which respectively transmit outgoing radio frequency signals (*e.g.*, to the network **24,** a router or directly to another terminal) and receive incoming radio frequency signals (*e.g.*, from the network **24,** a router or directly from another terminal), such as voice and data signals, via an antenna **48.** The communication module **36** may include a short-range transmitter and receiver, such as a Bluetooth transmitter and receiver. The antenna **48** may be an embedded antenna, a retractable antenna or any antenna known to those having skill in the art without departing from the scope of the present invention. The radio frequency signals transmitted between the mobile terminal **10** and the network **24** may include both traffic and control signals (*e.g.*, paging signals/messages for incoming calls), which are used to establish and maintain communication with another party or destination. The radio frequency signals may also include packet data information, such as, for example, cellular digital packet data (CDPD) information. In addition, the transceiver may include an infrared (IR) transceiver configured to transmit/receive infrared signals to/from other electronic devices via an IR port.

The controller **30** may support various functions of the mobile terminal **10.** The controller **30** can be any commercially available or custom microprocessor, for example. In use, the controller **30** of the mobile terminal **10** generates a display image on the display **28.** The controller **30** also transitions between and operates different operational modes of the mobile terminal **10** (*e.g.*, a phone mode, a music playback mode, a camera mode, etc.) as discussed herein. The controller **30** is operatively connected to a button activator **64** as discussed below.

The foregoing components of the mobile terminal **10** may be included in many conventional mobile terminals and their functionality is generally known to those skilled in the art. As used herein, the term "portable electronic device" or "mobile terminal" may include: a cellular radiotelephone with or without a multi-line display; a Personal Communications System (PCS) terminal that may combine a cellular radiotelephone with data processing, facsimile and data communications capabilities; a Personal Data Assistant (PDA) that can include a radiotelephone, pager, Internet/intranet access, Web browser, organizer, calendar and/or a global positioning system (GPS) receiver; a gaming device, an audio video player, and a conventional laptop and/or palmtop portable computer that may include a radiotelephone transceiver.

According to some embodiments and as illustrated in **Figures 10** and **11****,** the mobile terminal **10** is a handheld (portable) mobile terminal. By "handheld mobile terminal," it is meant that the outer dimensions of the mobile terminal are adapted and suitable for use by a typical operator using one hand. According to some embodiments, the total volume of the handheld mobile terminal is less than about 200 cc. According to some embodiments, the total volume of the handheld terminal is less than about 100 cc. According to some embodiments, the total volume of the handheld mobile terminal is between about 50 and 100 cc. According to some embodiments, no dimension of the handheld mobile terminal **10** exceeds about 200 mm.

The housing **12** defines an interior cavity **12A** and has a front wall **12B.** Button openings **12C** are defined in the front wall **12B.** The housing **12** may be formed of a polymeric material, such as polystyrene. Alternatively or additionally, the housing **12** may be formed of any other suitable material, such as metal. The housing **12** may be molded and may be assembled from multiple parts. While the mobile terminal **10** as shown is of a generally one-piece design, it is also contemplated that it may include two or more subhousings joined by a hinge or other suitable mechanism(s) to allow for relative movement between the housings. For example, the mobile terminal **10** may include a pair of subhousings hinged to form a clamshell housing. Handheld wireless communication terminals having clamshell housings are commonly referred to as "flip phones."

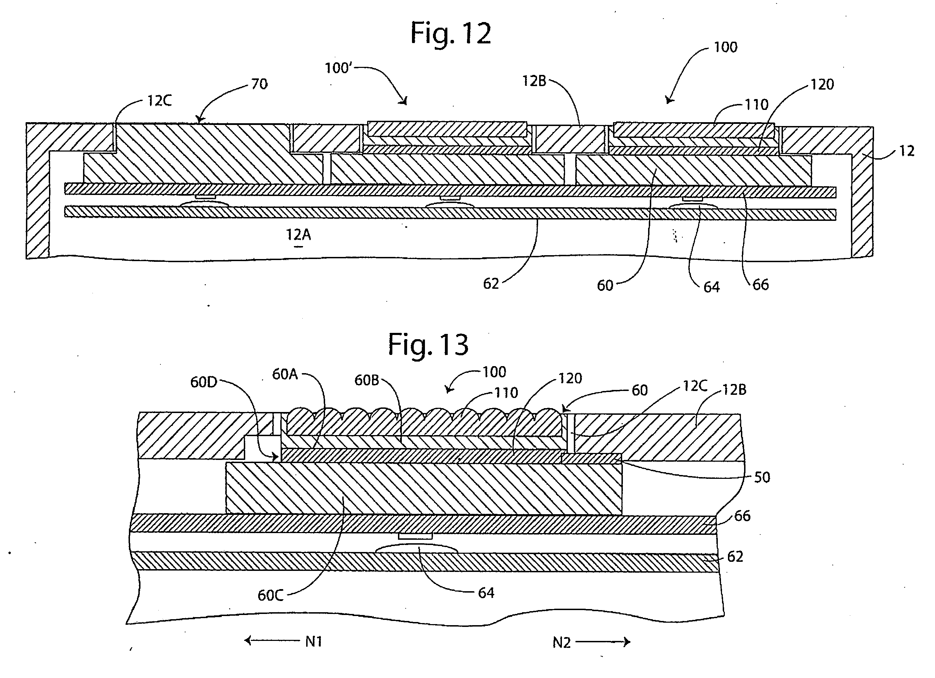

Referring to **Figures 12** and **13****,** the MMI **26** also includes the button system **100** and an associated button activator **64.** As shown in **Figure 13****,** the screen **110** and the sheet **120** are mounted on a button member or hard top **60** in or adjacent the button opening **12C.** The button member **60** includes a top portion **60B,** a base portion **60C,** a cavity **60A** defined in the top portion **60B,** and a slot **60D** defined between the top portion **60B** and the base portion **60C.** The screen **110** is secured in the cavity **60A.** The sheet **120** is slidably mounted in the slot **60D** for slidable movement in opposed directions **N1** and **N2** relative to the screen **110.** At least the top portion **60B** is formed of a transparent or translucent material so that the sheet **120** is viewable through the screen **110** and the top portion **60B.** A mode selection lever **50** (**Figures 10, 11** and **13**) is joined to the sheet **120** for sliding the sheet **120** in the button member **60.**

The base portion **60C** is mounted on a flexible rubber pad **66,** which overlies a keypad printed circuit board **62.** A button activator **64** such as a dome switch is mounted on the board **62** below the button member **60.**

In use, the user may press the screen **110** in normal fashion for operation of a button. When a sufficient force is applied to the screen **110,** the button activator **64** is activated to provide a signal or other indication to an electronic device (*e.g.*, the controller **30)** indicating that a user has selected the button. For example, the button activator **64** may be a key of a keypad that is operatively connected to an associated logic circuit that generates an electrical signal responsive to and corresponding to the actuation of the button activator **64.**

Referring to **Figure 10****,** the terminal **10** is shown in a first selected mode such as a phone mode. The mode selection lever **50** is in a corresponding first position. The sheet **120** is positioned in the first position such that the first source image **122** is displayed to the user in the button system **100** as the first displayed image **123.** When the user wishes to change the terminal 10 to a second mode, such as a sound or music player mode, the user slides the lever **50** to a second position as indicated by the arrow **N1** and shown in **Figure 10****.** As discussed above, sliding the lever **50** moves the sheet **120** relative to the screen **110** so that the second source image **124** is displayed to the user in the button system **100** as the second displayed image **125** (**Figure 11**). The user may slide the lever **50** back in the direction **N2** to return to the first position, thereby returning the terminal **10** back to the first mode and causing the button system **100** to again display the displayed image **123.**

The repositioning of the lever **50** also actuates the controller **30** to change from the first mode to the second mode of the terminal **10.** The button activator **64** can be actuated in either mode (*e.g.*, by pressing the button system **100**), and such actuation will in turn actuate the controller **30** in accordance with the current mode. That is, the operation triggered by the button activator **64** may be different for each mode. According to some embodiments, the change in operational modes of the terminal **10** occurs substantially simultaneously with the change between the corresponding displayed images **123, 125.**

According to some embodiments, the controller **30** may control an actuator **52** (*e.g.*, an electric motor) that slides the image sheet **120** relative to the screen **110.** The controller **30** may automatically actuate the actuator **52** to move the sheet **120** responsive to activation/change of modes of the mobile terminal **10** or other device, thereby automatically changing the button display to correspond to the selected mode.

The screen **110** may serve as the contact surface for the user to actuate the button activator **64.** Alternatively, a button cover member may overlie the screen **110,** in which case the user will press on the button cover member in order to actuate the button activator **64.**

The button system **100** may include multiple buttons or keys. For example, other buttons **100'** of the terminal **10** may include a screen and image sheet as described herein. The multiple buttons may use respective portions of the same screen **110** and/or image sheet **120** or each use respective different screens and/or image sheets. In the latter case, some or all of the different screens or image sheets may be ganged or interconnected so that they are moved together. For example, sliding the lever **50** as discussed above may serve to change the image displayed on two or more of the keys of the terminal **10.** The terminal **10** may include further buttons **70** that are not multi-face buttons as described herein. Button systems of the present invention may be incorporated into buttons other than keypad buttons, as well.

Although the electronic devices are discussed herein as being included as part of a mobile wireless communication terminal, for example, the mobile terminal **10** of **Figures 9-13****,** embodiments of the present invention are not limited to this configuration. Various aspects of the present invention may be incorporated into other types of devices including, for example, mobile devices that are not wireless communication terminals or non-portable electronic devices, without departing from the scope of the present invention.

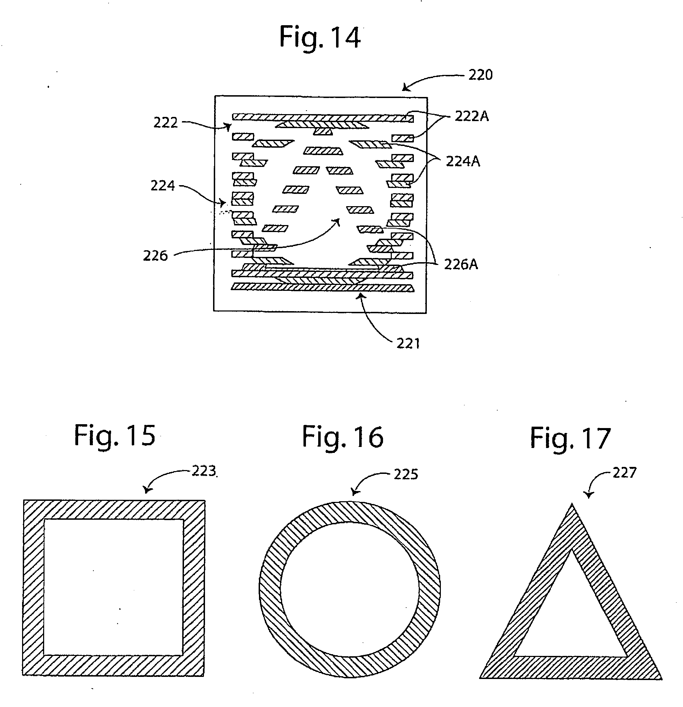

According to further embodiments of the present invention, button systems as described herein may be adapted to display more than two alternate displayed images. For example, with reference to **Figures 14-17****,** the button system **100** may include an image sheet **220** in place of the sheet **120** so that the button system **100** is capable of displaying each of three alternative displayed images **223, 225, 227.** The button system **100** may be otherwise constructed in the same manner as described above. Alternatively, the button system may be modified (*e.g.*, with a modified lens screen in place of the screen **110**) to accommodate the image sheet **220.**

Referring to **Figure 14****,** the image sheet **220** includes a first source image **222** consisting of spaced apart image segments **222A** generally forming a square, a second source image **224** consisting of spaced apart image segments **224A** generally forming a circle, and a third source image **226** consisting of spaced apart image segments **226A** generally forming a triangle. The image segments **222A, 224A, 226A** are sequentially interdigitated to form a combined source image **221.**

The modified button system may be used in the same manner as described above except that the lens screen **110** and the sheet **220** can be selectively positioned in each of three alternative positions to alternatively display each of the three respective displayed images **223, 225, 227.** Referring also to **Figure 2****,** when in the first position, the segments **224A, 226A** are positioned between points **P2** and **P3** and between points **P4** and **P5** so that they are not displayed, and the segments **222A** are positioned between points **P1** and **P2** and between points **P3** and **P4** so that they are displayed as the displayed image **223 (****Figure 15****).** When in the second position, the segments **222A, 226A** are positioned between points **P2** and **P3** and between points **P4** and **P5** so that they are not displayed, and the segments **224A** are positioned between points **P1** and **P2** and between points **P3** and **P4** so that they are displayed as the displayed image **225 (****Figure 16****).** When in the third position, the segments **222A, 224A** are positioned between points **P2** and **P3** and between points **P4** and **P5** so that they are not displayed, and the segments **226A** are positioned between points **P1** and **P2** and between points **P3** and **P4** so that they are displayed as displayed image **227** (**Figure 17**).

The modified button system may be operated to return to each of the three positions as desired. Button systems according to embodiments of the invention may be modified to display more than three alternative displayed images, as well.

Many alterations and modifications may be made by those having ordinary skill in the art, given the benefit of present disclosure. Therefore, it must be understood that the illustrated embodiments have been set forth only for the purposes of example, and that it should not be taken as limiting the invention as defined by the following claims.

## Claims

1. A portable electronic device comprising:
a plurality of button systems (100), each of the button systems (100) including:
an image sheet (120, 220) including first and second source images (122, 222), (124, 224); and
a screen (10) superimposed on the image sheet (120, 220) such that the image sheet (120, 220) is displayed to a user through the screen (110);
wherein the image sheet (120, 220) and the screen (110) are relatively movable between a first position, wherein the button system (100) displays the first source image (122, 222) to the user, and a second position, wherein the button system (100) displays the second source image (124, 224) to the user, and the screen (110) includes a lens screen (110) adapted to convert the first and second source images (122, 222), (124, 224) as displayed to the user into first and second displayed images (123, 223), (125, 225), the first and second displayed images (123, 223), (125, 225) being different from the first and second source images (122, 222), (124, 224), and the lens screen (110) includes at least one prism (112) and is a lenticular lens;
the portable electronic device further comprising:
an actuator operable to move at least one of the image sheet (120, 220) and the screen (110) for each of the plurality of button systems (100) simultaneously between the first position and the second position; and
a controller (30) operable to change an operational mode of the associated electronic device when the actuator moves at least one of the image sheet (120, 220) and the screen (110) for each of the plurality of button systems (100) between the first position and the second position.

2. The electronic device of Claim 1 wherein each of the button systems (100) includes a button activator (64) underlying the image sheet (120, 220).

3. The electronic device of Claim 1 wherein the first and second positions correspond to first and second different operational modes of an associated electronic device.

4. The electronic device of Claim 1 wherein the device is a wireless communications device.

5. The electronic device of Claim 1 wherein the device is a handheld wireless communications device (10).

6. The electronic device of Claim 1 wherein the radius of curvature of each prism (112) is no more than about 0.1 mm.

7. The electronic device of Claim 1 wherein:
the first source image (122, 222) includes a plurality of first image segments (122A, 222A) having first voids (122B, 222B) therebetween; and
the first voids (122B, 222B) are reduced in the first displayed image (123, 223) as compared to the first source image (122, 222).

8. The electronic device of Claim 7 wherein:
the second source image (124, 224) includes a plurality of second image segments (124A, 224A) having second voids (124B, 224B) therebetween and being interposed between the first image segments (122A, 222A); and
the second voids (124B, 224B) are reduced in the second displayed image (125, 225) as compared to the second source image (124, 224).

9. The electronic device of Claim 1 including a mask pattern on the screen (110) adapted to hide the second source image (124, 224) when the button system (100) is in the first position.

10. The electronic device of Claim 1 wherein:
the image sheet (120, 220) includes a third source image (226); and
the image sheet (120, 220) and the screen (110) are relatively movable to a third position different from the first and second positions, wherein the button system (100) displays the third source image (226) to the user.

11. A method for providing a plurality of multi-face button systems (100) on a portable electronic device, each of the plurality of button systems (100) including an image sheet (120, 220) and a screen (110) superimposed on the image sheet (120, 220) such that the image sheet (120, 220) is displayed to a user through the screen (110), the image sheet (120, 220) including first and second source images (122, 222), (124, 224), the method comprising:
relatively moving, simultaneously for each of the plurality of button systems (100), the image sheet (120, 220) and the screen (110) from a first position, wherein the button system (100) displays the first source image (122, 222) to the user, and a second position, wherein the button system displays the second source image (124, 224) to the user,
wherein the screen (110) includes a lens screen (110) adapted to convert the first and second source images (122, 222), (124, 224) as displayed to the user into first and second displayed images (123, 223), (125, 225), the first and
second displayed images (123, 223), (125, 225) being different from the first and second source images (122, 222), (124, 224), and the lens screen (110) includes at least one prism (112) and is a lenticular lens;
wherein relatively moving the image sheet (120, 220) and the screen (110) includes operating an actuator that is operable to simultaneously actuate a controller (30) to change the operational mode of the associated electronic device and to move at least one of the image sheet (120, 220) and the screen (110) between the first position and the second position simultaneously for each of the plurality of button systems (110).

12. The method of Claim 11 further including pressing the screen (110) to actuate a button activator (64).

13. The method of Claim 11 further including thereafter relatively moving the image sheet (120, 220) and the screen (110) from the second position to the first position to again display the first source image (122, 222) to the user.

14. The method of Claim 11 including switching from a first operational mode of an associated electronic device to a second, different operational mode of an associated electronic device.

## Patentansprüche

1. Tragbare elektronische Vorrichtung, umfassend:
mehrere Schaltflächensysteme (100), wobei jedes der Schaltflächensysteme (100) aufweist:
eine Bildschicht (120, 220), welche ein erstes und ein zweites Quellbild (122, 222), (124, 224) aufweist; und
einen Bildschirm (110), welcher der Bildschicht (120, 220) derart überlagert ist, dass die Bildschicht (120, 220) einem Benutzer durch den Bildschirm (110) angezeigt wird;
wobei die Bildschicht (120, 220) und der Bildschirm (110) zwischen einer ersten Position, in welcher das Schaltflächensystem (100) dem Benutzer das erste Quellbild (122, 222) anzeigt, und einer zweiten Position, in welcher das Schaltflächensystem (100) dem Benutzer das zweite Quellbild (124, 224) anzeigt, relativ beweglich sind, und wobei der Bildschirm (110) einen Linsenbildschirm (110) aufweist, welcher ausgestaltet ist, das erste und zweite Quellbild (122, 222), (124, 224), während es einem Benutzer angezeigt wird, in ein erstes und ein zweites angezeigtes Bild (123, 223), (125, 225) umzuwandeln, wobei das erste und zweite angezeigte Bild (123, 223), (125, 225) unterschiedlich zu dem ersten und zweiten Quellbild (122, 222), (124, 224) ist, und wobei der Linsenbildschirm (110) mindestens ein Prisma (112) aufweist und eine linsenförmige Linse ist;
wobei die tragbare elektronische Vorrichtung ferner umfasst:
eine Betätigungsvorrichtung, welche ausgestaltet ist, die Bildschicht (120, 220) und / oder den Bildschirm (110) für jedes der mehreren Schaltflächensysteme (100) gleichzeitig zwischen der ersten Position und der zweiten Position zu bewegen; und
eine Steuerung (30), welche ausgestaltet ist, eine Betriebsart der zugeordneten elektronischen Vorrichtung zu ändern, wenn die Betätigungsvorrichtung die Bildschicht (120, 220) und / oder den Bildschirm (110) für jedes der mehreren Schaltflächensysteme zwischen der ersten Position und der zweiten Position bewegt.

2. Elektronische Vorrichtung nach Anspruch 1, wobei jedes der Schaltflächensysteme (100) ein Schaltflächenaktivierungsmittel (64) aufweist, welches unter der Bildschicht (120, 220) liegt.

3. Elektronische Vorrichtung nach Anspruch 1, wobei die erste Position und die zweite Position einer ersten und einer unterschiedlichen zweiten Betriebsart einer zugeordneten elektronischen Vorrichtung entsprechen.

4. Elektronische Vorrichtung nach Anspruch 1, wobei die Vorrichtung eine drahtlose Kommunikationsvorrichtung ist.

5. Elektronische Vorrichtung nach Anspruch 1, wobei die Vorrichtung eine drahtlose Handkommunikationsvorrichtung (10) ist.

6. Elektronische Vorrichtung nach Anspruch 1, wobei der Krümmungsradius von jedem Prisma (112) nicht mehr als näherungsweise 0,1 mm beträgt.

7. Elektronische Vorrichtung nach Anspruch 1, wobei:
das erste Quellbild (122, 222) mehrere erste Bildsegmente (122A, 222A) mit ersten Lücken (122B, 222B) dazwischen aufweist; und
die ersten Lücken (122B, 222B) in dem ersten angezeigten Bild (123, 223) verglichen mit dem ersten Quellbild (122, 222) verkleinert sind.

8. Elektronische Vorrichtung nach Anspruch 7, wobei:
das zweite Quellbild (124, 224) mehrere zweite Bildsegmente (124A, 224A) aufweist, welche zweite Lücken (124B, 224B) dazwischen aufweisen und zwischen den ersten Bildsegmenten (122A, 222A) angeordnet sind; und
wobei die zweiten Lücken (124B, 224B) in dem zweiten angezeigten Bild (125, 225) verglichen mit dem zweiten Quellbild (124, 224) verkleinert sind.

9. Elektronische Vorrichtung nach Anspruch 1, umfassend ein Maskenmuster auf dem Bildschirm (110), welches ausgestaltet ist, das zweite Quellbild (124, 224) auszublenden, wenn das Schaltflächensystem (100) in der ersten Position ist.

10. Elektronische Vorrichtung nach Anspruch 1, wobei:
die Bildschicht (120, 220) ein drittes Quellbild (226) aufweist; und
die Bildschicht (120, 220) und der Bildschirm (110) in eine dritte Position relativ beweglich sind, welche unterschiedlich zu der ersten und zweiten Position ist, wobei das Schaltflächensystem (100) das dritte Quellbild (226) für den Benutzer anzeigt.

11. Verfahren zum Bereitstellen mehrerer Mehrflächenschaltflächensysteme (100) an einer tragbaren elektronischen Vorrichtung, wobei jedes der mehreren Schaltflächensysteme (100) eine Bildschicht (120, 220) und einen Bildschirm (110) aufweist, welcher der Bildschicht (120, 220) derart überlagert ist, dass die Bildschicht (120, 220) einem Benutzer durch den Bildschirm (110) angezeigt wird, wobei die Bildschicht (120, 220) ein erstes und ein zweites Quellbild (122, 222), (124, 224) aufweist, wobei das Verfahren umfasst:
relatives Bewegen der Bildschicht (120, 220) und des Bildschirms (110) von einer ersten Position, in welcher das Schaltflächensystem (100) dem Benutzer das erste Quellbild (122, 222) anzeigt, zu einer zweiten Position, in welcher das Schaltflächensystem dem Benutzer das zweite Quellbild (124, 224) anzeigt, für jedes der mehreren Schaltflächensysteme gleichzeitig,
wobei der Bildschirm (110) einen Linsenbildschirm (110) aufweist, welcher ausgestaltet ist, das erste und das zweite Quellbild (122, 222), (124, 224) in ein erstes und ein zweites angezeigtes Bild (123, 223), (125, 225) umzuwandeln, während es dem Benutzer angezeigt wird,
wobei das erste und das zweite angezeigte Bild (123, 223), (125, 225) unterschiedlich zu dem ersten und dem zweiten Quellbild (122, 222), (124, 224) sind, und
wobei der Linsenbildschirm (110) mindestens ein Prisma (112) aufweist und eine linsenförmige Linse ist;
wobei das relative Bewegen der Bildschicht (120, 220) und des Bildschirms (110) ein Betätigen einer Betätigungsvorrichtung aufweist, welche ausgestaltet ist, gleichzeitig eine Steuerung (30) zu betätigen, um die Betriebsart der zugeordneten elektronischen Vorrichtung zu ändern und die Bildschicht (120, 220) und / oder den Bildschirm (110) zwischen der ersten Position und der zweiten Position gleichzeitig für jedes der mehreren Schaltflächensysteme (110) zu bewegen.

12. Verfahren nach Anspruch 11, ferner umfassend ein Drücken des Bildschirms (110), um ein Schaltflächenaktivierungsmittel (64) zu betätigen.

13. Verfahren nach Anspruch 11, ferner umfassend danach ein relatives Bewegen der Bildschicht (120, 220) und des Bildschirms (110) von der zweiten Position zu der ersten Position, um dem Benutzer wieder das erste Quellbild (122, 222) anzuzeigen.

14. Verfahren nach Anspruch 11, umfassend ein Schalten von einer ersten Betriebsart einer zugeordneten elektronischen Vorrichtung zu einer unterschiedlichen zweiten Betriebsart einer zugeordneten elektronischen Vorrichtung.

## Revendications

1. Dispositif électronique portatif comprenant :
une pluralité de systèmes de touches (100), chacun des systèmes de touches (100) incluant :
une feuille d'images (120, 220) incluant des première et deuxième images sources (122, 222), (124, 224) ; et
un écran (110) superposé sur la feuille d'images (120, 220) de façon que la feuille d'images (120, 220) soit affichée pour un utilisateur à travers l'écran (110) ;
dans lequel la feuille d'images (120, 220) et l'écran (110) sont mobiles de manière relative entre une première position, dans laquelle le système de touches (100) affiche la première image source (122, 222) pour l'utilisateur, et une deuxième position, dans laquelle le système de touches (100) affiche la deuxième image source (124, 224) pour l'utilisateur, et l'écran (110) inclut un écran de lentilles (110) apte à convertir les première et deuxième images sources (122, 222), (124, 224) telles qu'elles sont affichées pour l'utilisateur en des première et deuxième images affichées (123, 223), (125, 225), les première et deuxième images affichées (123, 223), (125, 225) étant différentes des première et deuxième images sources (122, 222), (124, 224), et l'écran de lentilles (110) inclut au moins un prisme (112) et est une lentille lenticulaire,
le dispositif électronique portatif comprenant en outre :
un actionneur utilisable pour déplacer au moins l'un de la feuille d'images (120, 220) et de l'écran (110) pour chacun de la pluralité de systèmes de touches (100) simultanément entre la première position et la deuxième position ; et
un régisseur (30) utilisable pour changer le mode de fonctionnement du dispositif électronique associé lorsque l'actionneur déplace au moins l'un de la feuille d'images (120, 220) et de l'écran (110) pour chacun de la pluralité de systèmes de touches (100) entre la première position et la deuxième position.

2. Dispositif électronique selon la revendication 1, dans lequel chacun des systèmes de touches (100) inclut un activateur de touches (64) sous-jacent à la feuille d'images (120, 220).

3. Dispositif électronique selon la revendication 1, dans lequel les première et deuxième positions correspondent à des premier et second modes différents de fonctionnement d'un dispositif électronique associé.

4. Dispositif électronique selon la revendication 1, le dispositif étant un dispositif de télécommunications sans fil.

5. Dispositif électronique selon la revendication 1, le dispositif étant un dispositif de télécommunications sans fil tenu à la main (10).

6. Dispositif électronique selon la revendication 1, dans lequel le rayon de courbure de chaque prisme (112) n'est pas plus grand qu'environ 0,1 mm.

7. Dispositif électronique selon la revendication 1, dans lequel :
la première image source (122, 222) inclut une pluralité de premiers segments d'image (122A, 222A) ayant des premiers vides (122B, 222B) entre eux, et
les premiers vides (122B, 222B) sont réduits dans la première image affichée (123, 223) par comparaison avec la première image source (122, 222).

8. Dispositif électronique selon la revendication 7, dans lequel :
la deuxième image source (124, 224) inclut une pluralité de seconds segments d'image (124A, 224A) ayant des seconds vides (124B, 224B) entre eux et étant interposés entre les premiers segments d'image (122A, 222A), et
les seconds vides (124B, 224B) sont réduits dans la deuxième image affichée (125, 225) par comparaison avec la deuxième image source (124, 224).

9. Dispositif électronique selon la revendication 1, incluant un motif de masque sur l'écran (110) apte à cacher la deuxième image source (124, 224) lorsque le système de touches (100) est dans la première position.

10. Dispositif électronique selon la revendication 1, dans lequel :
la feuille d'images (120, 220) inclut une troisième image source (226), et
la feuille d'images (120, 220) et l'écran (110) sont mobiles de façon relative jusqu'à une troisième position différente des première et deuxième positions, dans laquelle le système de touches (100) affiche la troisième image source (226) pour l'utilisateur.

11. Procédé de réalisation d'une pluralité de systèmes de touches multifaces (100) sur un dispositif électronique portatif, chacun de la pluralité de systèmes de touches (100) incluant une feuille d'images (120, 220) et un écran (110) superposé sur la feuille d'images (120, 220) de façon que la feuille d'images (120, 220) soit affichée pour un utilisateur à travers l'écran (110), la feuille d'images (120, 220) incluant des première et deuxième images sources (122, 222), (124, 224), le procédé comprenant :
le déplacement relatif, simultanément pour chacun de la pluralité de systèmes de touches (100), de la feuille d'images (120, 220) et de l'écran (110) entre une première position, dans laquelle le système de touches (100) affiche la première image source (122, 222) pour l'utilisateur, et une deuxième position, dans laquelle le système de touches affiche la deuxième image source (124, 224) pour l'utilisateur,
dans lequel l'écran (110) inclut un écran de lentilles (110) apte à convertir les première et deuxième images sources (122, 222), (124, 224) telles qu'elles sont affichées pour l'utilisateur en des première et deuxième images affichées (123, 223), (125, 225), les première et deuxième images affichées (123, 223), (125, 225) étant différentes des première et deuxième images sources (122, 222), (124, 224), et l'écran de lentilles (110) inclut au moins un prisme (112) et est une lentille lenticulaire,
dans lequel le déplacement relatif de la feuille d'images (120, 220) et de l'écran (110) inclut la mise en oeuvre d'un actionneur qui est utilisable pour actionner simultanément un régisseur (30) pour changer le mode de fonctionnement du dispositif électronique associé et pour déplacer au moins l'un de la feuille d'images (120, 220) et de l'écran (110) entre la première position et la deuxième position simultanément pour chacun de la pluralité de systèmes de touches (110).

12. Procédé selon la revendication 11, incluant en outre la pression sur l'écran (110) pour actionner un activateur de touches (64).

13. Procédé selon la revendication 11, incluant en outre ensuite le déplacement relatif de la feuille d'images (120, 220) et de l'écran (110) de la deuxième position à la première position pour afficher à nouveau la première image source (122, 222) pour l'utilisateur.

14. Procédé selon la revendication 11, incluant en outre la commutation d'un premier mode de fonctionnement d'un dispositif électronique associé à un second mode, différent, de fonctionnement d'un dispositif électronique associé.
